Europäisches Patentamt

European Patent Office

Office européen des brevets

(19)

(11) Veröffentlichungsnummer: **0 287 562**
**B1**

(12) EUROPÄISCHE PATENTSCHRIFT

(45) Veröffentlichungstag der Patentschrifft:
**21.03.90**

(21) Anmeldenummer: **87900043.8**

(22) Anmeldetag: **02.12.86**

(86) Internationale Anmeldenummer:
**PCT/DE 86/00491**

(87) Internationale Veröffentlichungsnummer:
**WO 87/03663 (18.06.87 Gazette 87/13)**

(51) Int. Cl. ⁵: **F 16 J 1/14, F 02 F 3/00**

(54) ZWEITEILIGER TAUCHKOLBEN, INSBESONDERE FÜR VERBRENNUNGSMOTOREN.

(30) Priorität: **04.12.85 DE 3542800**

(43) Veröffentlichungstag der Anmeldung:
**26.10.88 Patentblatt 88/43**

(45) Bekanntmachung des Hinweises auf die Patenterteilung:
**21.03.90 Patentblatt 90/12**

(84) Bennante Vertragsstaaten:
**DE FR GB IT**

(56) Entgegenhaltungen:
**FR-A-2 243 335**

(73) Patentinhaber: **MAHLE GMBH**
**Pragstrasse 26-46 Postfach 50 07 69**
**D-7000 Stuttgart 50 (DE)**

(72) Erfinder: **RIPBERGER, Emil**
**Brunnenstr. 6**
**D-7148 Remseck 3 (DE)**

EP 0 287 562 B1

LIBERGRAF, STOCKHOLM 1990

2

## Beschreibung

Die Erfindung betrifft einen zweiteiligen Tauchkolben nach dem Oberbegriff des Patentanspruchs 1.

Derartige Kolben sind aus DE-PS 2 351 994 bekannt. Dadurch, daß das Ringband des Kolbenkopfes den Schaft in Richtung der Bolzenachse von radial außen umfaßt, ist eine niedrige Kompressionshöhe des Kolbens erreichbar. Denn der Kolbenbolzen kann dadurch so weit oben in dem Kolbenschaft gelagert sein, daß der obere Bereich des den Kolbenbolzen aufnehmenden Auges des Schaftes oberhalb der untersten Kolbenringnut in dem Kolbenkopf zu liegen kommen kann.

Bei derart ausgebildeten Kolben kann es vorkommen, daß in bestimmten Fällen, insbesondere solchen, in denen die Seitenführung des Pleuels im Kolbenkopf erfolgt, bei niedriger Höhe des zylindrischen Führungsabschnittes des Kolbenkopfes keine in Richtung des Kolbenbolzens ausreichende Seitenführung des Kolbenkopfes mehr gegeben ist.

Hier Abhilfe zu schaffen, ist die Aufgabe der vorliegenden Erfindung.

Gelöst wird diese durch eine Ausbildung des zylindrischen Führungsabschnittes des Kolbenkopfes nach den kennzeichnenden Merkmalen des Patentanspruchs 1.

Zweckmäßige Ausgestaltungen sind Gegenstand der Unteransprüche.

Aus DE-PS 1 291 955 ist zwar bereits ein Kolben bekannt, bei dem der Schaft weit über die frei darunter liegenden Bolzennaben hinausragt. Diese Ausführung ist jedoch mit der erfindungsgemäßen Ausführung nicht vergleichbar, da Kolbenkopf und Schaft nicht voneinander getrennt sind.

Ein Ausführungsbeispiel der Erfindung ist in der Zeichnung dargestellt.

Es zeigen

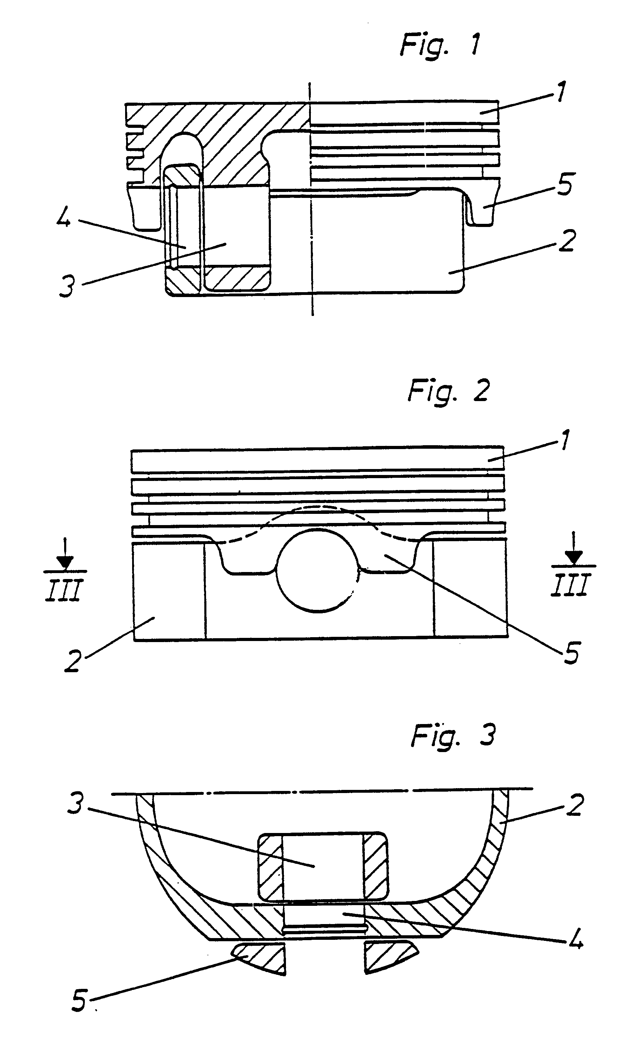

Fig. 1 einen Kolben teils im Längsschnitt, teils in Ansicht
Fig. 2 eine Seitenansicht des Kolbens
Fig. 3 einen Schnitt durch den Kolben nach Linie III - III

Der Kolben setzt sich zusammen aus einem Kolbenkopf 1 und einem Kolbenschaft 2. Diese beiden Teile sind über einen nicht dargestellten Kolbenbolzen, der in Nabenbohrungen 3 des Kolbenkopfes 1 und Bohrungen 4 in dem Kolbenschaft 2 eingreift, miteinander verbunden. In Kolbenbolzenrichtung ragt von dem Kolbenkopf 1 ein zylindrischer Führungsabschnitt 5 radial über den Schaft 2 hinaus und zwar bis etwa in die Höhe der Kolbenbolzenachse. In diesem den Schaft 2 überragenden Führungsabschnitt 5 sind Öffnungen zum Durchführen des Kolbenbolzens vorgesehen. Von der Unterkante des Kolbenkopfes in Druck-Gegendruckrichtung aus gerechnet beträgt die darüber hinausragende Höhe des Führungsabschnittes 5 in Kolbenlängsrichtung etwa 40 % der Länge des Kolbenschafts 2 im Bereich der Druck- Gegendruckrichtung. In Umfangsrichtung mißt der Bereich, in dem die Führungsabschnitte den Schaft 2 überragen, etwa 60°, wobei die Abschnitte 5 jeweils symmetrisch zu jeder Seite der Kolbenbolzenachse verlaufen.

Die beiden in Kolbenbolzenrichtung liegenden den Schaft 2 überragenden Führungsabschnitte 5 gewährleisten eine gute Seitenführung des Kolbenkopfes 1. Dies ist besonders wichtig bei der Seitenführung des an dem Kolben angelenkten Pleuels innerhalb des Kolbenkopfes 1.

## Patentansprüche

1. Zweiteiliger Tauchkolben, insbesondere für Verbrennungsmotoren, dessen Schaftteil vom Kopfteil vollständig getrennt und mit diesem nur durch einen Kolbenbolzen gelenkig verbunden ist und bei dem in Druck- Gegendruckrichtung die Lauffläche des Schaftes und des Kopfes etwa in einer gleichen zylindrischen Mantelfläche liegen, während in Bolzenrichtung der Schaft radial einwärts zurückgenommen und dort teilweise von einem an der gemeinsamen Mantelfläche anliegenden Ringbandabschnitt des Kopfes von radial außen umfaßt ist, dadurch *gekennzeichnet,* daß von dem den Kolbenschaft (2) umfassenden zylindrischen Führungsabschnitt (5) des Kolbenkopfes (1) bei im Motor eingebauter Lage des Kolbens zumindest Teilbereiche weiter zum kurbelwellenseitigen unteren Ende des Kolbens reichen als im Bereich, in dem der Kopf (1) den Schaft (2) radial nicht umfaßt.

2. Tauchkolben nach Anspruch 1, dadurch *gekennzeichnet,* daß die Teilbereiche der Führungsabschnitte (5) von der in Druck- Gegendruckrichtung liegenden unteren am Schaft (2) zugewandten Kante in Kolbenlängsrichtung mindestens um 10 % der Länge des Schaftes (2) in Druck-Gegendruckrichtung den Schaft (2) überragen.

3. Tauchkolben nach Anspruch 2, dadurch *gekennzeichnet,* daß das Maß des Überragens mindestens 20 % beträgt.

## Claims

1. Two-part plunger piston, particularly for internal combustion engines, of which the piston body is completely separated from the head part being articulatingly connected thereto only by a gudgeon pin, and in which, in the pressure and backpressure direction, the working surface of the body and of the head lie substantially in one and the same cylindrical generatrix, while in the gudgeon pin direction, the body is set back radially inwardly in which portion it is partially and radially outwardly enclosed by a ring band portion of the head which bears on the common surface, characterised in that when the piston is installed in the engine, at least partial zones of the cylindrical

3

guide portion (5) of the piston head (1) which encloses the piston body (2) extend towards the bottom end of the piston, which is at the crank shaft end, farther than in the area in which the body (1) does not radially surround the body (2).

2. Plunger piston according to claim 1, characterised in that the partial zones of the guide portions (5) project from the (in the pressure/back pressure direction) lower edge which is towards the body (2) and in the longitudinal direction of the piston and beyond the body (2) by at least 10 % of the length of the body (2) in the pressure/back pressure direction.

3. Plunger piston according to Claim 2, characterized in that the amount of the projection is at least 20 %.

**Revendications**

1. Piston plongeur en deux parties, notamment pour moteurs à combustion interne, dont la partie jupe est complètement distincte de la partie tête et n'est reliée à celle-ci et articulée sur elle que par un tourillon, et dans lequel, dans le sens action-réaction, les surfaces de portée de cette jupe et de cette tête se trouvent sensiblement sur une même surface-enveloppe cylindrique, alors que, dans le sens du tourillon, et radialement la jupe est en retrait vers l'intérieur et est partiellement entourée extérieurement par un élément de la tête formant une bande annulaire adjacente à cette surface-enveloppe, piston caractérisé en ce que des parties au moins de l'élément (5) cylindrique de guidage de la tête (1), qui entourent la jupe (2) lorsque le piston est monté dans le moteur, se prolongent vers l'extrémité inférieure du piston, du côté du vilebrequin, plus loin que dans la zone dans laquelle la tête (1) n'entoure pas radialement cette jupe (2).

2. Piston plongeur selon la revendication 1, caractérisé en ce que les parties de l'élément (5) de guidage surplombent la jupe et dépassent d'au moins 10 % de la longueur de la jupe (2) dans le sens action-réaction, dans le sens de la longueur du piston, le bord inférieur situé dans le sens action-réaction et tourné vers la jupe (2).

3. Piston plongeur selon la revendication 2, caractérisé en ce que la valeur du dépassement est égale à a moins 20 %.

*Fig. 1*

*Fig. 2*

*Fig. 3*

1